# EUROPEAN PATENT SPECIFICATION

(11) **EP 2 649 701 B1**
(45) Date of publication and mention of the grant of the patent: **05.04.2017**
(21) Application number: 11847136.6
(22) Date of filing: 07.12.2011
(51) Int. Cl.: H01M 2/20, H01M 10/42, H01M 10/48, H01M 10/04

(54) **BATTERY MODULE**
BATTERIEMODUL
MODULE DE BATTERIE

(30) Priority: 08.12.2010 CN 201010581609
(43) Date of publication of application: 16.10.2013
(73) Proprietor: BYD Company Limited, Shenzhen 518118 (CN); Shenzhen BYD Auto R&D Company Limited, Shenzhen, Guangdong 518118 (CN)
(72) Inventor: ZENG, Zhiliang, Shenzhen Guangdong 518118 (CN); ZHENG, Weixin, Shenzhen Guangdong 518118 (CN); ZHU, Jianhua, Shenzhen Guangdong 518118 (CN)
(74) Representative: Hoffmann Eitle
(86) International application number: PCT/CN2011/083652
(87) International publication number: WO 2012/075948

(56) References cited:
- WO-A1-2010/067602
- WO-A1-2010/113455
- WO-A2-2010/019503
- CN-A- 1 881 654
- CN-A- 101 728 584
- US-A1- 2009 154 048
- US-A1- 2010 062 329

## Description

### FIELD

The present disclosure relates to the field of a power battery, more particularly to an improved battery module.

### BACKGROUND

With the exhaustion of the petroleum and the developing requirement of environmental protection, a conventional oil-fueled vehicle may be gradually replaced by an electromotive vehicle or a hybrid electric vehicle. Therefore, as a main energy source of the electromotive vehicle, a battery module may become more and more important.

For an on-board power battery, the battery module needs have high volume, which may bring problems such as large bulk and complex structure etc. Besides, because the battery module may usually be formed by connecting hundreds of single batteries in series, the connections between the single batteries may be complex. In order to ensure the safe performance of the on-board power battery, a sampling module is an important means for monitoring the temperature and the voltage of each single battery.

At present, the sampling module may adopt the conventional wiring sampling pattern, that is, the wirings are directly connected with the single battery to transmit a sampling signal. With the conventional sampling pattern, the circuitry may be complex, and the wirings may need to be manually assembled, which may not facilitate the automatic production. Moreover, during the assembling process, wrong or missing assembling etc. may occur. In addition, there may need a special fixing device for the wirings which may have complex structures, and the sheaths of the wirings may be prone to abrasion to cause current leakage.

WO 2010/019503 A2 discloses a bus bar assembly with a flexible member comprising a plurality of apertures. The bus bar assembly also comprises a plurality of electrically conductive members.

US 2010/0062329 A1 discloses an interconnecting washer assembly for a battery assembly that is employed in a vehicle.

Finally, WO 2010/113455 A1 discloses a battery module and system in the context of an electric vehicle.

Therefore, to ensure high capacity of the battery module, the connecting and the sampling structure may need to be simplified, to provide a battery module with simple assembling process and enhanced safety performance.

### SUMMARY

In viewing thereof, a battery module may need to be provided, which may have a simple sampling structure and a simple assembling process with high reliability and enhanced safety performance.

The mentioned problems are solved by the subject-matter of the independent claim. Further preferred embodiments are defined in the dependent claims.

Compared with the battery module having the conventional sampling structure, the battery module according to an embodiment of the present disclosure may have the following advantages.

By connecting the flexible circuit board with the temperature sensor and the voltage sampling terminal, the battery module may be simplified for assembly with a reduced volume, and the assembling process may be easily controlled which may not bring assembly errors.

With the battery module according to an embodiment of the present disclosure, the members may be bonded and fixed using the inner insulating layer and the external insulating layer, which may be easily achieved. Moreover, the inner insulating layer and the external insulating layer may effectively protect the circuitry of the flexible circuit board, thus preventing the circuit from current leakage caused by the wire sheath abrasion.

In addition, the battery module according to an embodiment of the present disclosure may have higher reliability which may be easily applied to the automatic production, which may further satisfy the connection requirement of the sampling module in the art.

Additional aspects and advantages of the embodiments of present disclosure will be given in part in the following descriptions, become apparent in part from the following descriptions, or be learned from the practice of the embodiments of the present disclosure.

### BRIEF DESCRIPTION OF THE DRAWINGS

The foregoing and other features and advantages of the disclosure will become apparent and more readily appreciated from the following descriptions taken in conjunction with the drawings in which:
Fig. 1 is an exploded perspective view of a sampling module in a battery module according to an embodiment of the present disclosure;
Fig. 2 is a perspective view of a flexible circuit board according to an embodiment of the present disclosure;
Fig. 3 is a perspective view of a power splicer in a battery module according to an embodiment of the present disclosure;
Fig. 4 is a schematic view of a power splicer with two adjacent single batteries according to an embodiment of the present disclosure;
Fig. 5 is a perspective view of a battery pack with a sampling module according to an embodiment of the present disclosure; and
Fig. 6 is a perspective view of a battery module according to an embodiment of the present disclosure.

### DETAILED DESCRIPTION

Reference will be made in detail to embodiments of the present disclosure. The embodiments described herein are explanatory and illustrative, which are used to generally understand the present disclosure. The embodiments shall not be construed to limit the present disclosure. The same or similar elements and the elements having same or similar functions are denoted by like reference numerals throughout the descriptions.

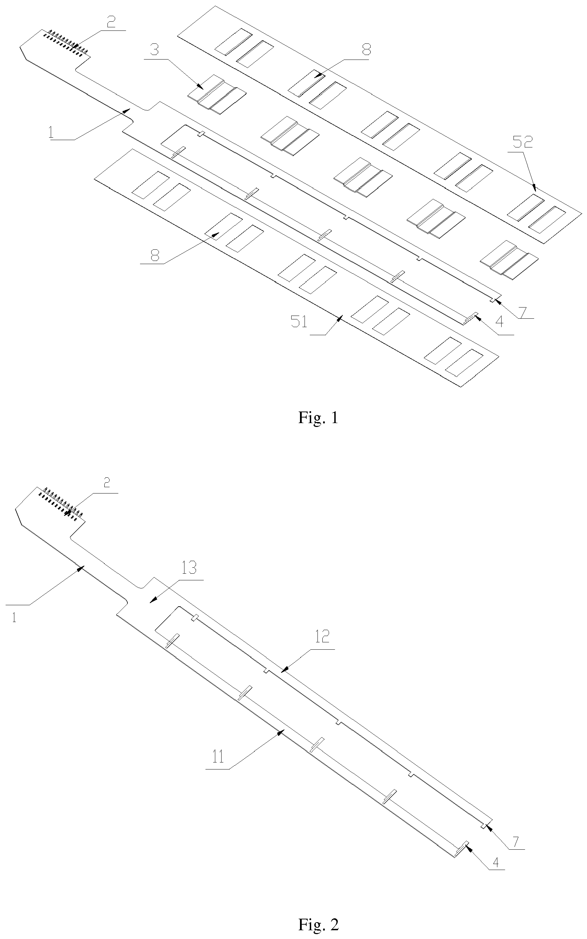

Hereinafter, the battery module according to an embodiment of the present disclosure will be described in detail with reference to Figs.1-6.

As shown in Firs.1-6, the battery module according to an embodiment of the present disclosure may comprise: a battery pack 100, a sampling module 200 and a shell 300. The battery pack 100 may comprise a plurality of single batteries 6 and a plurality of power splicers 3 for electrically connecting adjacent single batteries 6. The sampling module 200 may comprise a flexible circuit board 1 and an insulation protection unit. A plurality of voltage sampling terminals 7 and a plurality of temperature sensors 4 are disposed on the flexible circuit board 1 respectively, each temperature sensor 4 is connected with a corresponding power splicer 3, and each voltage sampling terminal 7 is electrically connected with a corresponding power splicer 3. The insulation protection unit is disposed on the flexible circuit board 1 for insulating the flexible circuit board 1 from the battery pack 100 and the plurality of power splicers 3. The insulation protection unit comprises an external insulating layer (or a first insulating layer) 51 covering an external surface of the flexible circuit board 1, and an inner insulating layer (or a second insulating layer) 52 disposed between the power splicers 3 and the single batteries 6. The shell 300 is used for receiving the battery pack 100 and the sampling module 200.

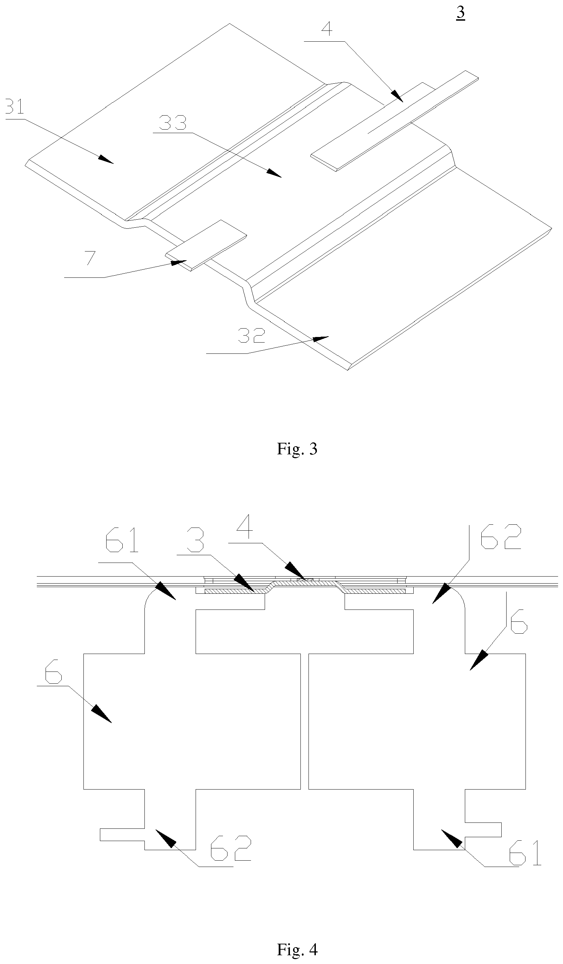

In one embodiment, the single battery 6 is shown in Fig. 4. A positive terminal 61 and a negative terminal 62 are disposed on two end faces of each single battery 6 respectively. The single batteries 6 are arranged in parallel, the positive terminal 61 of one single battery 6 and the negative terminal 62 of another single battery 6 adjacent to the one single battery 6 face upwards alternately, and the positive terminal 61 of one single battery 6 and the negative terminal 62 of another single battery adjacent to the positive terminal 61 of the one single battery 6 are connected via the power splicer 3 respectively. Accordingly, the single batteries 6 are connected in series via the power splicers 3.

As shown in Fig. 3, the power splicer 3 comprises a main part 33, a first connecting end 31, a second connecting end 32 connected with the main part 33 at opposite sides of the main part 33 respectively for electrically connecting with the adjacent single batteries 6. An end of each temperature sensor 4 and an end of each voltage sampling terminal 7 are connected with the main part 33 respectively, and the first and second connecting ends 31, 32 are respectively connected with the positive and negative terminals 61, 62 of two adjacent single batteries 6, thus electrically connecting the two adjacent single batteries 6.

Besides, to ensure the excellent conduction of the sampling current, the power splicers 3 and the voltage sampling terminals 7 may be connected by, such as tin, soldering etc. To ensure the temperature difference between the power splicers 3 and the temperature sensors 4 as small as possible, the temperature sensors 4 and the power splicers 3 may be bonded together with an adhesive having high thermal conductivity, such as thermal-conductive silicone rubber.

As shown in Fig. 1, the other ends of the temperature sensor 4 and the voltage sampling terminal 7 are connected with the flexible circuit board 1 respectively. According to an embodiment of the present disclosure, to ensure the good conductivity and good signal transmission effect among the temperature sensor 4, the voltage sampling terminal 7 and the flexible circuit board 1, the temperature sensor 4 and the voltage sampling terminal 7 are connected with the flexible circuit board 1 by tin soldering respectively. It should be noted that the material used for connecting the above mentioned members is not limited to tin, and other welding materials having good electrical conductivity may also be used instead.

In addition, a connector 2 may be formed, such as fixed etc., on a free end of the flexible circuit board 1, and the flexible circuit board 1 may be connected with an outside monitoring device (not shown) via the connector 2. The connector 2 may be a signal transmission interface known in the art, and so a detailed description thereof will be omitted here for clarity purpose.

As shown in Fig. 2, in one embodiment, the flexible circuit board 1 may comprise a temperature collecting arm 11, a voltage collecting arm 12 and a connecting arm 13. The plurality of temperature sensors 4 are connected with the temperature collecting arm 11, and the plurality of voltage sampling terminals 7 are connected with the voltage collecting arm 12. The voltage collecting arm 12 and the temperature collecting arm 11 are spaced apart from each other and connected with the connecting arm 13 respectively. The plurality of power splicers 3 are disposed in a space formed by the voltage collecting arm 12 and the temperature collecting arm 11.

The external and inner insulating layers 51, 52 are disposed on two sides of the flexible circuit board 1 respectively. Particularly, the external insulating layer 51 covers the external surface of the flexible circuit board 1, and the inner insulating layer 52 is disposed between the power splicers 3 and the single batteries 6. Furthermore, the inner insulating layer 52 and the external insulating layer 51 may cooperate with each other to wrap the power splicers 3, the temperature sensors 4, the voltage sampling terminals 7 and the flexible circuit board 1 together.

Each of the external and inner insulating layers 51, 52 may be made from a flexible PET (polyethylene terephthalate) material with excellent electrical insulating property. Accordingly, the adhesive used for connecting the external insulating layer 51 with the power splicers 3 or connecting the inner insulating layer 52 with the power splicers 3 may be a hot press adhesive having good thermal stability, good chemical stability and high bonding strength with metals. Each temperature sensor 4 may be a SMD (surface mounted device) thermistor sensor.

In one embodiment, to weld the battery module from the outside more conveniently and to electrically connect the first and the second connecting end 31, 32 of the power splicer 3 with the single batteries 6, as shown in Fig. 1, via holes 8 configured to match the first connecting end 31 and the second connecting end 32 are disposed in the inner and external insulating layers 52, 51 respectively, so that the welding and the assembling may become easier.

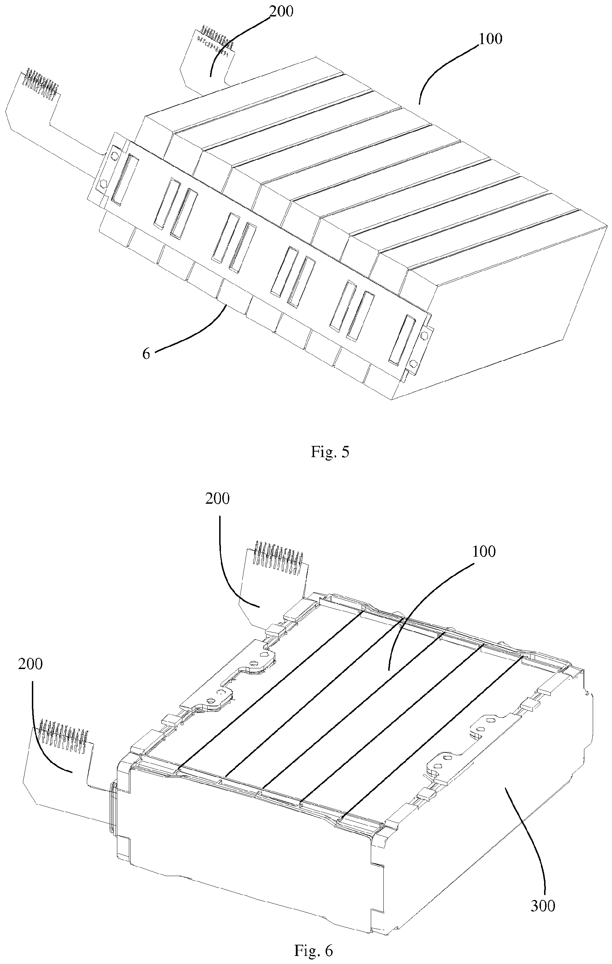

In one embodiment, the positive and negative terminals 61, 62 may be respectively disposed on two ends of each single battery 6, and therefore the assembled battery module may have a structure shown in Fig. 5. Certainly, in another embodiment, the positive terminal 61 and the negative terminal 62 may also be disposed on the same end of each single battery 6, and a detailed description thereof will be omitted here for clarity.

As shown in Fig. 6, the battery pack 100 may be installed easily inside the shell 300. It should be noted that the structure of the shell 300 of the battery module as well as the using and assembling method of the shell 300 may be well known in the art, and, therefore, a detailed description thereof will be omitted herein for clarity purpose.

Although explanatory embodiments have been shown and described, it would be appreciated by those skilled in the art that changes, alternatives, and modifications may be made in the embodiments without departing from the scope of the claims. Such changes, alternatives, and modifications all fall into the scope of the claims and their equivalents.

## Claims

1. A battery module, comprising:
a battery pack (100) comprising a plurality of single batteries (6) and a plurality of power splicers (3) for electrically connecting adjacent single batteries (6);
a sampling module (200) comprising a flexible circuit board (1), wherein a plurality of voltage sampling terminals (7) and a plurality of temperature sensors (4) are disposed on the flexible circuit board (1) respectively, each voltage sampling terminal (7) is electrically connected with each power splicer (3), and each temperature sensor (4) is connected with each power splicer (3); and
a shell (300) for receiving the battery pack (100) and the sampling module (200), **characterized in that** the flexible circuit board (1) comprises:
a voltage collecting arm (12) with the plurality of voltage sampling terminals (7) disposed thereon and electrically connected thereto;
a temperature collecting arm (11) with the plurality of temperature sensors (4) disposed thereon; and
a connecting arm (13), in which the voltage collecting arm (12) and the temperature collecting arm (11) are spaced apart from each other and connected to the connecting arm (13),
in which the plurality of power splicers (3) are disposed in a space between the voltage collecting arm (12) and the temperature collecting arm (11).

2. The battery module (200) according to claim 1, wherein the sampling module further comprises an insulation protection unit, the insulation protection unit comprising an external insulating layer covering an external surface of the flexible circuit board (1) and an inner insulating layer disposed between the plurality of power splicers (3) and the plurality of single batteries (6).

3. The battery module according to claim 1, wherein the sampling module (200) further comprises an insulation protection unit disposed on the flexible circuit board (1) for insulating the flexible circuit board (1) from the battery pack (100) and the plurality of power splicers (3).

4. The battery module according to claim 1, wherein the power splicer (3) comprises:
a main part with the temperature sensor (4) and the voltage sampling terminal (7) connected thereto; and
a first connecting end and a second connecting end connected with the main part at opposite sides thereof respectively for electrically connecting the adjacent single batteries (6).

5. The battery module according to claim 3, wherein the insulation protection unit comprises:
a first insulating layer ; and
a second insulating layer , in which the first and second insulating layers (51, 52) are disposed on two sides of the flexible circuit board (1) respectively.

6. The battery module according to claim 1, wherein the sampling module (200) further comprises a connector connected with the flexible circuit board (1).

7. The battery module according to claim 5, wherein there are via holes corresponding to a first connecting end and a second connecting end being formed in the first and second insulating layer respectively.

8. The battery module according to claim 1, wherein each temperature sensor (4) is bonded on each power splicer (3).

9. The battery module according to claim 5, wherein each of the first insulating layer and the second insulating layer is a PET layer.

10. The battery module according to claim 1, wherein each temperature sensor (4) is a surface mounted device, SMD, thermistor sensor.

11. The battery module according to claim 2, wherein each power splicer (3) comprises:
a first connecting end connected with a positive terminal of one single battery (6);
a second connecting end connected with a negative terminal of another single battery (6) adjacent to the one single battery (6) respectively; and
a main part with each temperature sensor (4) and each voltage sampling terminal (7) connected to the first connecting end and the second connecting end respectively.

12. The battery module according to claim 2, wherein the sampling module (200) further comprises a connector formed at a free end of the connecting arm (13).

## Patentansprüche

1. Batteriemodul, umfassend:
einen Batteriesatz (100), der mehrere Einzelbatterien (6) und mehrere Stromverbinder (3) umfasst, um angrenzende Einzelbatterien (6) elektrisch zu verbinden;
ein Messmodul (200), das eine flexible Leiterplatte (1) umfasst, wobei mehrere Spannungsmessanschlüsse (7) und mehrere Temperatursensoren (4) entsprechend auf der flexiblen Leiterplatte (1) angeordnet sind und jeder Spannungsmessanschluss (7) mit jedem Stromverbinder (3) elektrisch verbunden ist und jeder Temperatursensor (4) mit jedem Stromverbinder (3) verbunden ist; und
ein Gehäuse (300) zum Aufnehmen des Batteriesatzes (100) und des Messmoduls (200),
**dadurch gekennzeichnet, dass** die flexible Leiterplatte (1) umfasst:
einen Spannungssammelzweig (12), wobei die mehreren Spannungsmessanschlüsse (7) darauf angeordnet und elektrisch damit verbunden sind;
einen Temperatursammelzweig (11), wobei die mehreren Temperatursensoren (4) darauf angeordnet sind; und
einen Verbindungszweig (13), wobei der Spannungssammelzweig (12) und der Temperatursammelzweig (11) voneinander beabstandet und mit dem Verbindungszweig (13) verbunden sind,
wobei die mehreren Stromverbinder (3) in einem Raum zwischen dem Spannungssammelzweig (12) und dem Temperatursammelzweig (11) angeordnet sind.

2. Batteriemodul (200) nach Anspruch 1, wobei das Messmodul weiter eine Isolierschutzeinheit umfasst und die Isolierschutzeinheit eine äußere Isolierschicht umfasst, die eine Außenfläche der flexiblen Leiterplatte (1) abdeckt, und eine innere Isolierschicht, die zwischen den mehreren Stromverbindern (3) und den mehreren Einzelbatterien (6) angeordnet ist.

3. Batteriemodul nach Anspruch 1, wobei das Messmodul (200) weiter eine Isolierschutzeinheit, die auf der flexiblen Leiterplatte (1) angeordnet ist, zum Isolieren der flexiblen Leiterplatte (1) gegenüber dem Batteriesatz (100) und den mehreren Stromverbindern (3) umfasst.

4. Batteriemodul nach Anspruch 1, wobei der Stromverbinder (3) umfasst:
einen Hauptteil, wobei der Temperatursensor (4) und der Spannungsmessanschluss (7) damit verbunden sind; und
ein erstes Anschlussende und ein zweites Anschlussende, die mit dem Hauptteil zum elektrischen Verbinden der benachbarten Einzelbatterien (6) entsprechend an gegenüberliegenden Seiten davon verbunden sind.

5. Batteriemodul nach Anspruch 3, wobei die Isolierschutzeinheit umfasst:
eine erste Isolierschicht; und
eine zweite Isolierschicht, in der die ersten und zweiten Isolierschichten (51, 52) entsprechend auf zwei Seiten der flexiblen Leiterplatte (1) angeordnet sind.

6. Batteriemodul nach Anspruch 1, wobei das Messmodul (200) weiter einen Steckverbinder umfasst, der mit der flexiblen Leiterplatte (1) verbunden ist.

7. Batteriemodul nach Anspruch 5, wobei Durchgangslöcher vorhanden sind, die einem ersten Anschlussende und einem zweiten Anschlussende entsprechen, die entsprechend in der ersten und zweiten Isolierschicht gebildet sind.

8. Batteriemodul nach Anspruch 1, wobei jeder Temperatursensor (4) an jeden Stromverbinder (3) gebondet ist.

9. Batteriemodul nach Anspruch 5, wobei jede von der ersten Isolierschicht und der zweiten Isolierschicht eine PET-Schicht ist.

10. Batteriemodul nach Anspruch 1, wobei jeder Temperatursensor (4) ein Surface Mounted Device-, SMD, -Thermistorsensor ist.

11. Batteriemodul nach Anspruch 2, wobei jeder Stromverbinder (3) umfasst:
ein erstes Anschlussende, das mit einem Plusanschluss einer Einzelbatterie (6) verbunden ist;
ein zweites Anschlussende, das entsprechend mit einem Minusanschluss einer anderen Einzelbatterie (6) neben der einen Einzelbatterie (6) verbunden ist; und
einen Hauptteil, wobei jeder Temperatursensor (4) und jeder Spannungsmessanschluss (7) entsprechend mit dem ersten Anschlussende und dem zweiten Anschlussende verbunden ist.

12. Batteriemodul nach Anspruch 2, wobei das Messmodul (200) weiter einen Steckverbinder umfasst, der an einem freien Ende des Verbindungsarms (13) gebildet ist.

## Revendications

1. Module de batterie comprenant :
un bloc-batterie (100) comprenant une pluralité de batteries individuelles (6) et une pluralité d'empileurs de puissance (3) pour connecter électriquement des batteries individuelles adjacentes (6) ;
un module d'échantillonnage (200) comprenant une carte de circuit flexible (1), dans lequel une pluralité de bornes d'échantillonnage de tension (7) et une pluralité de capteurs de température (4) sont disposés respectivement sur la carte de circuit flexible (1), chaque borne d'échantillonnage de tension (7) est connectée électriquement à chaque empileur de puissance (3), et chaque capteur de température (4) est connecté à chaque empileur de puissance (3) ; et
une enveloppe (300) pour recevoir le bloc-batterie (100) et le module d'échantillonnage (200),
**caractérisé en ce que** la carte de circuit flexible (1) comprend :
un bras collecteur de tension (12) avec la pluralité de bornes d'échantillonnage de tension (7) disposée sur celui-ci et connectée électriquement à celui-ci ;
un bras collecteur de température (11) avec la pluralité de capteurs de température (4) disposée sur celui-ci ; et
un bras de connexion (13), dans lequel le bras collecteur de tension (12) et le bras collecteur de température (11) sont espacés l'un de l'autre et connectés au bras de connexion (13),
dans lequel la pluralité d'empileurs de puissance (3) est disposée dans un espace entre le bras collecteur de tension (12) et le bras collecteur de température (11).

2. Module de batterie (200) selon la revendication 1, dans lequel le module d'échantillonnage comprend en outre une unité de protection d'isolation, l'unité de protection d'isolation comprenant une couche isolante externe couvrant une surface externe de la carte de circuit flexible (1) et une couche isolante intérieure disposée entre la pluralité d'empileur de puissance (3) et la pluralité de batteries individuelles (6).

3. Module de batterie selon la revendication 1, dans lequel le module d'échantillonnage (200) comprend en outre une unité de protection d'isolation disposée sur la carte de circuit flexible (1) pour isoler la carte de circuit flexible (1) du bloc-batterie (100) et de la pluralité d'empileurs de puissance (3).

4. Module de batterie selon la revendication 1, dans lequel l'empileur de puissance (3) comprend :
une partie principale avec le capteur de température (4) et la borne d'échantillonnage de tension (7) connectés à celle-ci ; et
une première extrémité de connexion et une deuxième extrémité de connexion connectées avec la partie principale respectivement au niveau de côtés opposés de celle-ci pour connecter électriquement les batteries individuelles adjacentes (6).

5. Module de batterie selon la revendication 3, dans lequel l'unité de protection d'isolation comprend :
une première couche isolante ; et
une deuxième couche isolante, dans lequel les première et deuxième couches isolantes (51, 52) sont disposées respectivement sur deux côtés de la carte de circuit flexible (1).

6. Module de batterie selon la revendication 1, dans lequel le module d'échantillonnage (200) comprend en outre un connecteur connecté à la carte de circuit flexible (1).

7. Module de batterie selon la revendication 5, dans lequel il existe des trous traversants correspondant à une première extrémité de connexion et une deuxième extrémité de connexion, qui sont formés respectivement dans la première et la deuxième couche isolante.

8. Module de batterie selon la revendication 1, dans lequel chaque capteur de température (4) est fixé sur chaque empileur de puissance (3).

9. Module de batterie selon la revendication 5, dans lequel chacune de la première couche isolante et la deuxième couche isolante est une couche en PET.

10. Module de batterie selon la revendication 1, dans lequel chaque capteur de température (4) est un capteur à thermistance du type dispositif monté en surface, SMD.

11. Module de batterie selon la revendication 2, dans lequel chaque empileur de puissance (3) comprend :
une première extrémité de connexion connectée à une borne positive d'une première batterie individuelle (6) ;
une deuxième extrémité de connexion connectée à une borne négative d'une autre batterie individuelle (6) adjacente à la première batterie individuelle (6) respectivement; et
une partie principale avec chaque capteur de température (4) et chaque borne d'échantillonnage de tension (7) connectés respectivement à la première extrémité de connexion et à la deuxième extrémité de connexion.

12. Module de batterie selon la revendication 2, dans lequel le module d'échantillonnage (200) comprend en outre un connecteur formé au niveau d'une extrémité libre du bras de connexion (13).
